# EUROPEAN PATENT APPLICATION

(11) **EP 2 372 628 A2**
(43) Date of publication of application: **05.10.2011**
(21) Application number: 09829284.0
(22) Date of filing: 27.11.2009
(51) Int. Cl.: G06Q 20/00

(54) **METHOD, APPARATUS, AND SYSTEM FOR ENABLING PURCHASER TO DIRECT PAYMENT APPROVAL, SETTLEMENT, AND MEMBERSHIP SUBSCRIPTION USING MOBILE COMMUNICATION TERMINAL**

(30) Priority: 28.11.2008 KR 20080119424
(71) Applicant: Harex Infotech Inc., Seoul 100-272 (KR)
(72) Inventor: PARK, Kyung Yang, Seoul 110-872 (KR)
(74) Representative: Kador & Partner
(86) International application number: PCT/KR2009/006738
(87) International publication number: WO 2010/062077

(57) **Abstract**

The present invention relates to a method, to an apparatus, and to a system for payment for commercial dealings, service approval and subscription, capable of performing approval for payment for commercial dealings, and approval for various kinds of services such as a membership subscription, or the like, through mobile communication terminals, member store terminals, and a PG which store financial information of users. The present invention allows a mobile communication terminal which receives various kinds of purchase information or member store IDs from member store terminals to act as a main agent for approval for payment for commercial dealings or store membership subscription, to thereby make commercial dealings or store membership subscription safer and more convenient, when one intends to pay a bill or subscribe to a store membership by using the mobile communication terminal. The present invention enables approval for payment for commercial dealings to be performed by a variety of payment means such prepayment, direct payment, post payment such as card payments, post payment such as communication fee payment, payment by gift certificate or ticket, payment by mileage, bank transfer, and the like, by using the mobile communication terminal without providing personal financial information to the opponent. The present invention enables the member store terminal to transmit detailed purchase information together with a member store ID to the mobile communication terminal serving as a main agent for payment approval, wherein means for transmission can be a near field wireless communication such as a near field communication (NFC), RF, Bluetooth, optical communication, and the like, and a wired communication using a cable.

## Description

### Technical Field

The present invention relates, in general, to a method, apparatus and system for paying for, approving, and settling a commercial transaction, conducted by a purchaser, and subscribing to membership using a mobile communication terminal, and, more particularly, to a method, apparatus and system for conducting payments, approvals, settlements, and membership subscriptions, which can facilitate the payment and approval of a commercial transaction or the subscription to the membership of a merchant using a mobile communication terminal that stores the financial information of a user, a merchant terminal that transmits information, such as merchant information, product purchase information, and a purchase amount, to the mobile communication terminal, and a Payment Gateway (PG).

### Background Art

Conventional card payments have been conducted to adopt a method in which a card (various types of payment means cards such as a card, a prepaid card and a debit card) authorization device (terminal) that is connected to the Point-of-Sale (POS) system of a merchant, or is provided separately therefrom, obtains the card number of a purchaser and requests approval from a card company server via a Value-Added Network (VAN) company by using the card number together with merchant information and a payment amount.

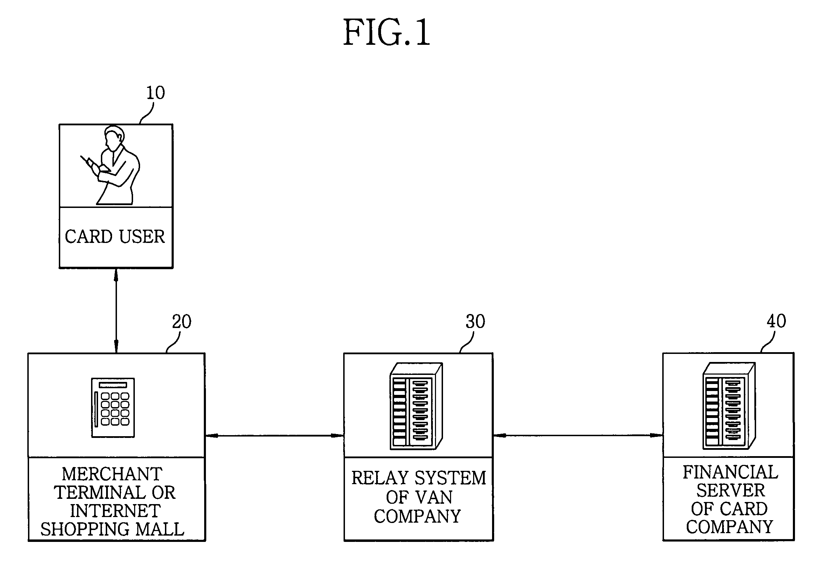

A detailed description will be given with reference to Fig. 1 as follows.

When a customer performs credit purchase at a designated merchant, the card reader of the merchant accesses the server of a card issuing company over the network of a VAN company, and obtains approval of card payment, and then completes a transaction.

A card user 10 holds a card issued by a card company, and a merchant has a typical card authorization device (terminal) 20 for accessing a specific VAN company and transmitting payment information. In general, the card authorization terminal 20 and the relay system 30 of the VAN company are connected to each other over a predetermined network (for example, a telephone network, the Internet, or the like), and the relay system 30 of the VAN company and the transaction approval system 40 of a relevant card company are connected to each other over a dedicated network.

When an online payment method based on an Internet shopping mall, instead of a merchant, is used, a Payment Gateway (PG) 30 performs the function of the VAN company.

The VAN company functions to relay purchase information, requested to be approved (or cancelled) by the card authorization terminal, to a relevant merchant and a relevant card company. The PG 30 is commissioned by a company that manages commercial transactions over the Internet to conduct payments, and is configured to charge a payment amount to a payment company such as a card company, a bank, an electronic payment service provider, or the like, to receive an amount of money corresponding to the payment amount, and to settle the amount of money back to the company that commissioned the payments.

When a card holder makes a purchase request while presenting his or her card to a merchant to pay for a product, the merchant uses a card authorization terminal to request approval from a card company. In this case, the card authorization terminal transmits card user information stored in the card of the user, product order information generated by the card authorization terminal, payment amount information, and merchant information to the VAN company. The VAN company receives the above information through the relay system 30 of the VAN company.

The relay system 30 of the VAN company that received such payment approval request data reads card company information recorded in the user information of the payment approval request data, and then transmits data related to a transaction approval request to the transaction approval system 40 of a relevant card company in order to request a transaction approval.

The transaction approval system 40 of the card company that received the data related to the transaction approval request compares the user information, product order information, payment amount information, and merchant information, which are included in the data related to the transaction approval request, with the member data of the relevant card company or merchant data, and then verifies whether a transaction occurring between the card user and the merchant is proper.

The transaction approval system 40 of the card company transmits the results of transaction approval for the transaction approval request to the relay system 30 of the VAN company that relayed the payment approval request. The relay system 30 of the VAN company stores approval number data, and thereafter transmits the approval number data to the card authorization terminal of the relevant merchant. The card authorization terminal prints the results of payment on a card receipt based on the transmitted approval data, and notifies the user of the results of the payment.

Such a payment method using cards is a method configured such that when a card user provides information required for card payment approval, such as a card number, the term of validity, and a card issuing company, to a terminal installed at a merchant, the merchant requests transaction approval from the relevant card company via the VAN company and then the payment is completed based on the results of approval.

However, such a card payment method has problems in that personal financial information including the card information of a card user may be leaked to a merchant, a financial accident using the card information of the card user may occur, and the risk of a third party duplicating the card information of the user may increase, and these problems equally occur even in a membership subscription procedure.

### Disclosure

### Technical Problem

An object of the present invention is to provide a payment method and system using a mobile communication terminal, which allows the user of a mobile communication terminal user, that is, a purchaser, to directly access a PG company using the purchaser terminal and then to obtain approval of a card transaction from a card company, without personally presenting his or her financial information to a merchant, in a payment approval method in which a card authorization terminal for payment means such as a conventional credit card, debit card, or prepaid card formed in a magnetic stripe or an Integrated Circuit (IC) chip (hereinafter referred to as an "merchant terminal" for various types of cards) was a subject that requested a card payment approval.

Another object of the present invention is to provide a payment approval system using the mobile communication terminal of a purchaser, which simplifies the construction of a merchant terminal, thus allowing the purchaser who holds the mobile communication terminal to be the subject of a card transaction.

A further object of the present invention is to provide a subscription method and system, which allows a terminal user to easily subscribe to the membership of a merchant using a mobile communication terminal.

### Technical Solution

In order to accomplish the above objects, the present invention provides a payment system using a mobile communication terminal, including a merchant terminal for transmitting purchase information and merchant information to a mobile communication terminal of a purchaser, and a financial server of a payment means financial company for receiving the purchase information, the merchant information, and financial information of the purchaser from the mobile communication terminal, wherein the payment means financial company corresponds to the financial information.

In accordance with another aspect of the present invention, there is provided a mobile communication terminal, including a short-range wireless communication module or a wired communication module, memory for storing financial information, and a control unit for, when receiving purchase information and merchant information via the short-range wireless communication module or the wired communication module, remotely and wirelessly transmitting the financial information together with the purchase information and the merchant information, and requesting payment.

In accordance with a further aspect of the present invention, there is provided a payment method using a mobile communication terminal, including receiving payment information, which is transmitted from a mobile communication terminal of a purchaser and which includes purchase information, merchant information, and financial information of the purchaser, determining whether to approve a payment based on the payment information, and transmitting information about payment approval.

In accordance with yet another aspect of the present invention, there is provided a payment method using a mobile communication terminal, including receiving payment information, which is transmitted from a mobile communication terminal of each purchaser and which includes purchase information and information about whether a cash transaction has been conducted, storing the payment information for each purchaser, and notifying a server of an Office of National Tax Administration of cash transaction information, which includes an amount of cash transaction, based on the stored payment information.

In accordance with still another aspect of the present invention, there is provided a method of subscribing to membership of a merchant using a mobile communication terminal, including receiving Identification (ID) of a merchant and ID of a user of a mobile communication terminal from the mobile communication terminal, determining whether the user has subscribed to membership of the merchant, if it is determined that the user has not subscribed to the membership, receiving personal information of the user, prompting the user to subscribe to the membership of the merchant, and transmitting results of the subscription.

### Advantageous Effects

According to the present invention, payments can be securely and promptly conducted using a mobile communication terminal without a card being presented to a merchant.

Further, unlike a conventional settlement method in which payments were conducted based on a merchant terminal (for example, a card reader) via a VAN company, the user of a mobile communication terminal, that is, a purchaser, may be the subject of a commercial transaction, thus reducing or eliminating the probability that the financial information of the purchaser will be stolen.

Furthermore, the construction of a merchant terminal is simplified, so that small-scale merchants who manage mobile retail outlets can also easily conduct card payments.

Furthermore, the user of a mobile communication terminal can subscribe to the membership of a merchant without leaking his or her personal information.

In this way, according to the present invention, the problems of security occurring in a conventional card transaction method can be solved, and card transactions can be easily conducted in an environment in which it is difficult to install a merchant terminal, thus activating card transactions.

### Description of Drawings

Fig. 1 is a diagram showing a conventional merchant-based card payment method using a merchant terminal and a VAN company;
Fig. 2 is a block diagram showing a payment system using a mobile communication terminal according to an embodiment of the present invention;
Fig. 3 is a block diagram showing a payment system using a mobile communication terminal and a special advance payment PG according to another embodiment of the present invention;
Fig. 4 is a block diagram showing a system for subscribing to the membership of a merchant using mobile communication according to a further embodiment of the present invention;
Fig. 5 is a diagram showing the operation of a payment method using a mobile communication terminal according to the present invention; and
Fig. 6 is a diagram showing a procedure for subscribing to the membership of a merchant using a mobile communication terminal and an ID PG according to the present invention.

### Best Mode

Hereinafter, the construction of the present invention will be described in detail with reference to the attached drawings. However, it is apparent that the present invention is not limited to the described embodiments and can be implemented in other forms.

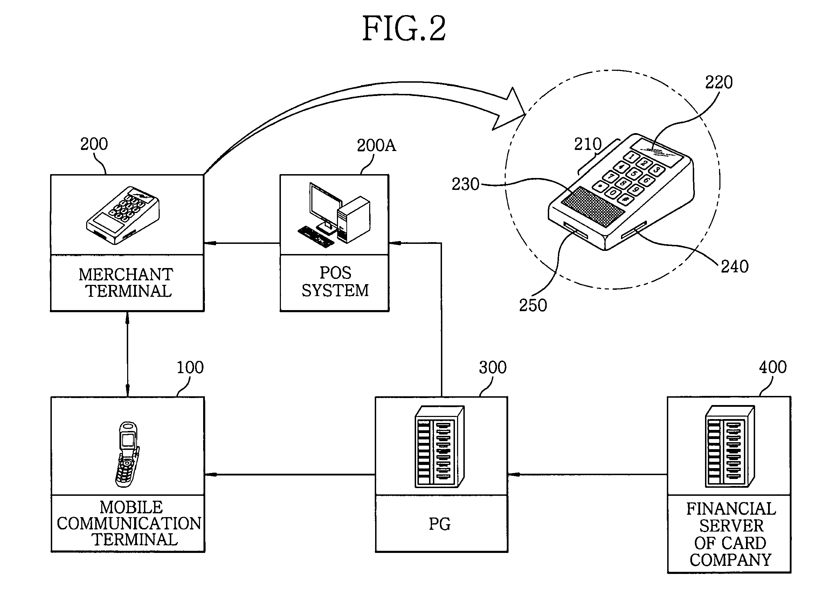

Fig. 2 is a block diagram showing a payment system using a mobile communication terminal according to an embodiment of the present invention.

Referring to Fig. 2, the payment system using the mobile communication terminal includes a mobile communication terminal 100 which has a contactless wireless transmission/reception means and includes personal information storage memory such as a Universal Subscriber Identity Module (USIM) chip, a Secure Digital (SD) card, or another memory, a merchant terminal 200 which is able to transmit purchase information and merchant information to the mobile communication terminal, a merchant Point-Of-Sale (POS) system 200A which is connected to the merchant terminal, a payment gateway (PG) 300 which receives a payment approval request from the mobile communication terminal 100, and the financial server 400 of a financial company such as a card company, which determines whether to approve a payment in response to the payment approval request.

The mobile communication terminal 100 stores information about various types of accounts of a purchaser such as bank, security and insurance accounts, various types of payment cards such as a cash card, a credit card, a debit card, a prepaid card, and a gift card, various types of personal Identification (ID) cards such as an ID card, a pass, and a membership card, and various types of service information such as a ticket, a coupon, a gift certificate, customer reward points, and business points, and transmits relevant information when various types of transactions are conducted.

For example, in a financial transaction, the mobile communication terminal 100 receives (product) purchase information and merchant information from the merchant terminal 200, and transmits financial information, such as the bank account or credit card number of a purchaser, the product purchase information, and the merchant information to the PG 300, a credit card company or a bank, thus requesting the approval of a transaction therefrom. If the transaction has been approved, the mobile communication terminal 100 receives the payment approval number of a card company from the PG 300 or the credit card company, or receives notification of transfer completion from the bank.

Alternatively, the mobile communication terminal 100 may be used to transmit pass information to a security center and to obtain permission to access a security place when accessing the security place. Other service types such as gift certificates or various points can be used in a similar form within the scope of the technical spirit of the present invention. Therefore, although a description will be made based on financial transactions for convenience of description and better understanding of the present invention, it is apparent that the fields of application of the present invention are not limited to financial transactions.

The mobile communication terminal 100 includes a mobile phone, a Personal Digital Assistant (PDA) terminal, and a portable wireless communication terminal. The mobile communication terminal 100 may include a Universal Subscriber Identity Module (USIM) chip which is an identification card for the user of the mobile communication terminal 100. The USIM chip includes therein a payment program, a user authentication program, etc., and may also include personal information, for example, various types of account information such as bank, security, and insurance accounts and a virtual account number, various types of payment card information such as a cash card, a debit card, a prepaid card, and a gift card, various types of personal ID information such as ID, a pass, and membership, and various types of service information such as a ticket, a coupon, points, customer reward points, and mileage.

Further, the USIM chip may include information about a plurality of cards, so that such information is displayed on the screen of the mobile communication terminal 100 to allow the purchaser to select a card to be used for payment, or so that the priorities of cards are set in advance to allow a specific card to be selected depending on the priorities of the cards.

When the merchant information and the purchase information are transmitted to the mobile communication terminal 100 and are stored therein, a password stored in the USIM chip is compared to the password entered by the user, so that a user authentication procedure is performed. When the authentication of the user has been successfully performed, the merchant information and the purchase information, together with financial information that is stored in the mobile communication terminal 100 or selected by the user, are transmitted to the PG.

Further, when micropayment approval is performed or when personal authentication is not important, a personal authentication verification procedure may be omitted and a payment approval procedure may be immediately performed according to the policy of a service provider.

When the purchase information and the merchant information are received over mobile communication (including global roaming) or long-range communication such as Internet communication without using a short-range communication module, the personal financial information can be transmitted to the PG 300, together with the purchase information and the merchant information.

In the prior art, while an approval request for credit payment is made via the merchant terminal 200 and the relay system of the VAN company, and the financial information of the purchaser may be stolen, a payment request made in the present invention is configured such that the financial information and the purchase information are immediately transmitted by a mobile phone user to the PG via the mobile phone, thus reducing or eliminating the probability that the financial information of the user will be stolen.

Meanwhile, although, in the above embodiment, the case where the USIM chip is included in the mobile communication terminal 100 has been presented and described, it is apparent that a scheme in which various types of information and programs are stored either in the internal storage area of the mobile communication terminal 100 or in a separate memory card such as an SD card, regardless of whether the USIM chip has been included in the terminal, can be taken.

The merchant terminal 200 basically includes an input unit 210, a display unit 220, a short-range wireless communication transmission/reception unit 230, memory 240, and a communication port 250.

When purchase information and/or merchant information are input from the merchant via the input unit 210, the pieces of input information may be displayed on the display unit 220. The input unit is either implemented as a keypad to receive purchase information as a seller manipulates keys, or implemented as a barcode recognition unit to receive purchase information as the barcode of a product is recognized, but the input unit is not limited to this structure.

When the merchant terminal 200 is used with the terminal 200 attached to a POS system or a card reader 200A installed in the merchant, the merchant terminal 200 may be a dummy-type simple transceiver for short-range wireless communication that does not require an input unit, a display or memory.

The short-range wireless communication transmission/reception unit 230 includes a short-range wireless communication transmission/reception means, such as means for Near Field Communication (NFC), Radio Frequency (RF), Bluetooth or optical (for example, infrared) communication, for transmitting or receiving details of transactions, the results of payment approval, etc. to or from the mobile communication terminal of the user, and may transmit the purchase information and the merchant information to the mobile communication terminal 100 and receive payment approval details from the mobile communication terminal of the user using short-range wireless communication. The communication port 250 is implemented as a communication port 250 connected to the POS system or other communication means (a telephone, the Internet, or the like), and may be connected to the PG company 300 so that the payment approval details are received over a communication network.

The short-range wireless communication transmission/reception unit 230 may transmit data using an optical-based or RF-based short-range wireless communication method, but it is apparent that a communication method is not limited to this embodiment and that the unit 230 may be any of various devices (devices configured to perform data transmission based on wired communication using a connection cable and a port, or perform mobile communication over a mobile communication network) capable of transmitting data to the mobile communication terminal 100.

The memory 240 may store the merchant information, the purchase information, and the payment approval information.

The merchant terminal 200 of the present invention does not need to perform communication with the external VAN company, unlike the conventional merchant terminal 20 shown in Fig. 1.

When a product purchaser desires to purchase a product, a seller enters purchase information, such as the price of the product or the like, using the key input unit 210 of the merchant terminal 200, and then transfers merchant information and the purchase information to the mobile communication terminal 100 of the purchaser via the communication unit 230. A subsequent payment approval request procedure is performed by the mobile communication terminal 100 of the purchaser.

The merchant terminal 200 exchanges data, such as the purchase information, with the mobile communication terminal using a short-range contactless communication method such as a Near Field Communication (NFC), RF, Bluetooth or optical communication method, and receives payment approval details from the mobile communication terminal of the user. Further, when the merchant terminal 200 is connected to the POS system or the like, the merchant terminal 200 may receive notification of payment approval details directly from the PG company.

Alternatively, in the case of a mobile communication terminal equipped with a bidirectional transmission/reception function such as an NFC function, the mobile communication terminal itself may be the merchant terminal 200, and payment approval may be performed in such a way that the mobile communication terminal 100 of the user requests approval as a subject, but the notification of payment approval details may be directly provided from the PG 300 to the mobile communication terminal of the merchant, that is, the merchant terminal 200. Of course, even in this case, the mobile communication terminal 100 of the user may receive payment details, and then transmit the payment details to the terminal of the merchant.

The mobile communication terminal 100 may be registered on the merchant terminal 200, so that the merchant terminal 200 may be configured to have therein a mobile communication function or to access a separate mobile communication device and to communicate with the mobile communication terminal 100 through a Short Message Service (SMS) or the like.

The merchant terminal 200 may be either independently present or connected to the POS system of the merchant through a wired/wireless connection port. Alternatively, the merchant terminal 200 may be configured to be mounted in the POS system.

In this case, the merchant terminal 200 may be configured such that at the same time that the POS system is used (for example, the price of a transaction product is entered), the purchase information and the merchant information are transmitted to the mobile communication terminal 100.

Hereinafter, referring still to Fig. 2, the approval of a card user and the approval of a payment, which are conducted between the mobile communication terminal 100, the PG 300, and the financial server 400 of the card company, will be described.

After receiving the merchant information and the purchase information from the merchant terminal 200, the mobile communication terminal 100 transmits financial information stored therein or entered by the user (a credit card number or a virtual account number), together with the received merchant information and purchase information, to the PG 300, and requests the PG 300 to approve a payment.

The PG 300 receives payment information (the merchant information, the purchase information, a payment amount, and the purchaser's financial information) from the mobile communication terminal 100, determines a relevant card company, and sends the payment information or a payment approval request message, including the payment information, to the financial server 400 of the relevant card company. The financial server 400 of the card company determines whether the user of the mobile communication terminal 100 and the merchant are members of the relevant card company and whether the current transaction is a transaction conducted within the credit limit of the user, and then determines whether to approve the payment.

If the financial server 400 of the card company approves the payment, it may transmit a payment approval number and/or payment results to the mobile communication terminal 100 either via the PG 300 or directly, thus allowing the purchaser to check the approval. In contrast, if the approval of the payment is not obtained, the financial server 400 notifies the purchaser of this fact.

Preferably, the merchant terminal 200 is equipped with a data reception function to receive the payment approval number and the payment results from the mobile communication terminal 100 or the PG 200, thus allowing the seller to determine whether the payment has been approved.

After the payment approval has been determined by the financial server 400 of the card company, the card company transfers or pays a purchase amount either via the PG 300 or directly.

Based on the above-described payment method according to the present invention, credit transactions can be significantly extended. For example, in the case of small-scale mobile retail outlets such as covered cart bars, payment based on credit cards was impossible because the conventional POS system could not be used. However, when the payment method according to the present invention is adopted, the users of the covered cart bars can receive purchase information and merchant information from the merchant terminal 200 using their own mobile communication terminals 100, and transmit the received information together with their own credit account numbers to the PG, thus personally requesting credit payment from the PG. If the owner of a covered cart bar (the owner of a merchant) is in possession of a mobile communication terminal equipped with a short-range wireless communication function such as NFC or RF communication, the mobile communication terminal of the owner of the merchant may be just the merchant terminal 200.

Furthermore, since a card holder or a credit account holder conducts a commercial transaction using his or her mobile communication terminal 100, a concern about the leakage of financial information such as the account number of the user or the like can be reduced.

Further, since the financial information of the purchaser is transmitted to the PG over a mobile communication network that makes it impossible or very difficult to attempt tapping, security is intensified compared to the conventional case in which financial information was transmitted between the merchant POS system and the VAN company over a typical wired telephone network. Moreover, the mobile communication terminal 100 encrypts transaction information and financial information and transmits the encrypted information to the PG 200, thus further enhancing security.

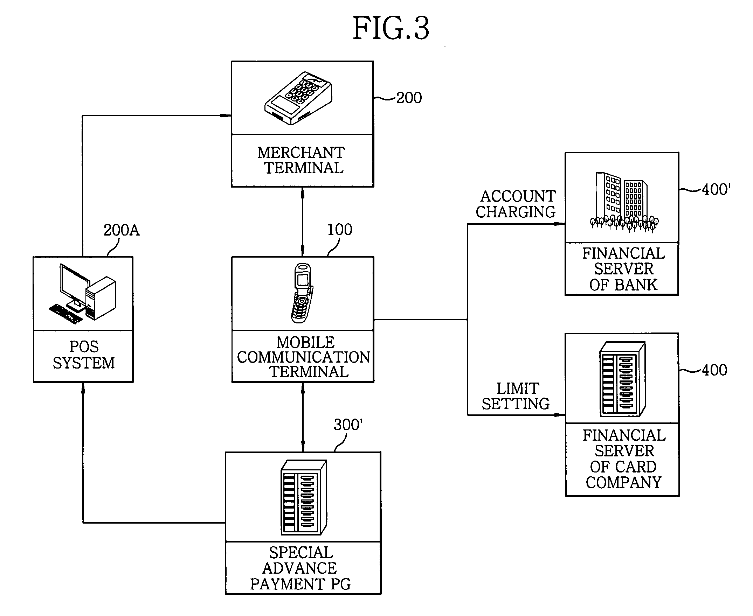

Fig. 3 is a block diagram showing a payment system using a mobile communication terminal and a special advance payment PG according to another embodiment of the present invention.

A card user opens an account (virtual account 420) via a financial institution, charges the virtual account in advance, and is then capable of conducting payment according to the above-described method.

Referring to Fig. 3, a detailed description will be made. The payment system using the mobile communication terminal and the special advance payment PG includes a mobile communication terminal 100, a merchant terminal 200, a special advance payment PG 300', the financial server 400 of a card company additionally equipped with a limit management system, and the financial server 400' of a bank.

The functions and constructions of the merchant terminal 200 and the mobile communication terminal 100 are identical to those given in the detailed description of Fig. 2. Hereinafter, the special advance payment PG 300', the financial server 400 of the card company, and the financial server 400' of the bank will be described in detail.

The user of the mobile communication terminal 100 sets a usage limit in the financial server 400 of the card company, deposits an amount of money corresponding to the usage limit, and charges the account of the financial server 400' of the card company (including a virtual account). It is preferable to construct the mobile communication terminal 100 so that the setting of the limit and the charging of the account can be performed using the mobile communication terminal 100 from the standpoint of convenience.

Thereafter, when a payment approval request is received from the mobile communication terminal 100, the financial server 400 of the card company compares the usage limit of the card user with the purchase information. If the usage limit exceeds the price of the product, the financial server 400 approves the transaction, and subtracts the product price from the usage limit.

A procedure for withdrawing money and depositing money for individual merchants is performed between the financial server 400 of the card company and the financial server 400' of the bank.

If the usage limit does not exceed the purchase price of the product included in the purchase information, notice that payment has not been approved is transmitted to the mobile communication terminal 100 and/or the merchant terminal 200 via the special advance payment PG 300'.

According to a further embodiment of the present invention, credit card payment or prepaid card payment using the mobile communication terminal as described in Fig. 2 can also be applied to payments using various types of payment means such as debit cards, mileage, communication billing/payment, and gift certificate payment.

As described above, cash transaction information, rather than card payment information, is added to the purchase information and the merchant information using the merchant terminal 200, and resulting information is transmitted to the mobile communication terminal 100.

According to the above method described with reference to Fig. 2 or 3, the mobile communication terminal 100 transmits cash transaction information to the PG 300, and the PG 300 stores cash transaction information transmitted from individual users.

The stored cash transaction information is reported by the PG 300 to the Office of National Tax Administration every quarter, or at the end of the year, thus allowing each user to conveniently receive the benefit of tax deduction. That is, even if a user makes a purchase at a small-scale store having difficulty in issuing receipts for cash payments and does not get a receipt for cash payment, he or she can receive the benefit of tax deduction based on the receipts for cash payments according to the construction of the above-described embodiment.

Meanwhile, the user of the mobile communication terminal 10 can easily subscribe to the membership of each merchant using the mobile communication terminal 100 and an ID PG 300" within the scope of the technical spirit of the present invention.

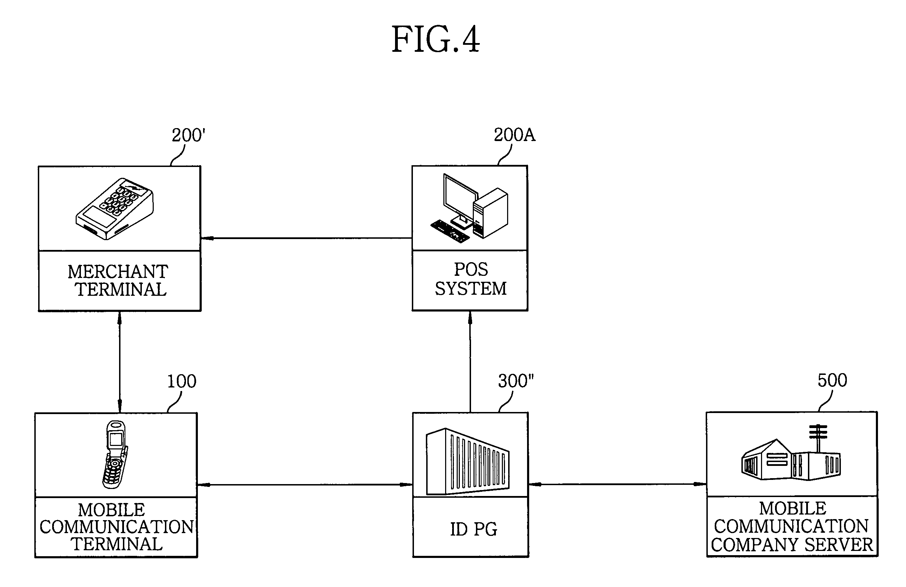

Fig. 4 is a block diagram showing a system for subscribing to the membership of a merchant using mobile communication according to a further embodiment of the present invention.

Referring to Fig. 4, the merchant membership subscription system using a mobile communication network includes a merchant Identification (ID) terminal 200', a mobile communication terminal 100, an ID PG 300", and a mobile communication company server 500.

The mobile communication terminal 100 transmits merchant ID from the merchant ID terminal 200' to the mobile communication terminal 100.

The mobile communication terminal 100 transmits the received merchant ID and its own ID (for example, Universal IC Card-ID: UICC-ID) to the ID PG 300", and the ID PG 300" determines whether the user of the mobile communication terminal 100 has subscribed to the membership of a relevant merchant.

If it is determined that the user has not subscribed to the membership, the ID PG 300" requests the mobile communication terminal 100 to input the personal information (for example, contact information such as an address, birthday, etc.) of the terminal user, and the mobile communication terminal 100 receives the personal information of the terminal user and transmits it to the ID PG 300". Alternatively, the ID PG 300" transmits mobile communication terminal ID to the mobile communication company server 500, and the mobile communication company server 500 identifies the user of the terminal based on the mobile communication terminal ID, extracts the personal information of the user (for example, contact information such as an address, birthday, etc.), and then transmits the personal information to the ID PG 300".

When the USIM chip is included in the mobile communication terminal 100, the mobile communication company server 500 can identify the user and extract personal information based on UICC-ID uniquely assigned to the USIM chip. Further, it is apparent that the user's personal information can also be extracted using a terminal number or the like.

The ID PG 300" performs a procedure for allowing the user to subscribe to the membership of the merchant on the basis of the received user's personal information, and then transmits the results of the subscription to the mobile communication terminal 100. Additionally, the mobile communication terminal 100 may re-access the merchant ID terminal 200' and transmit the results of the subscription to the merchant ID terminal 200'.

If the merchant ID terminal 200' has a wired/wireless communication function, the ID PG 300" may directly transmit the results of the subscription to the merchant ID terminal 200'.

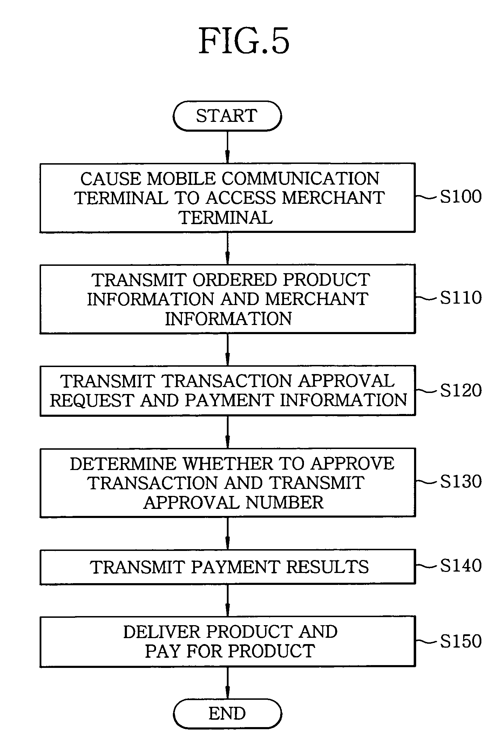

Hereinafter, the above-described payment method using the mobile communication terminal according to the present invention will be described with reference to Fig. 5.

The user of the mobile communication terminal 100 purchases a product or service at a merchant, and causes the mobile communication terminal 100 to access a merchant terminal 200 at step S100.

The merchant terminal 200 transmits purchase information and merchant information to the mobile communication terminal 100 at step S110.

The mobile communication terminal 100 transmits a payment approval request and payment information to a PG 300 on the basis of the purchase information and the merchant information, and the PG 300 transmits them to the financial server 400 of a card company at step S120.

The financial server 400 of the card company determines whether to approve a transaction, and transmits a payment approval number to the PG 300 at step S130.

The PG 300 that received the payment approval number transmits the results of payment to the mobile communication terminal 100 or the merchant terminal 200 at step S140.

When payment approval has been verified by the mobile communication terminal 100 of the purchaser or by the merchant terminal 200, a seller delivers the product to the user of the mobile communication terminal 100, the PG 300 requests the card company to pay for the purchased product as a proxy of the merchant, the card company pays an amount of money requested to be paid to the PG 300, and thereafter the PG 300 pays an amount of money settled to the merchant.

Meanwhile, the gist of the technical sprit of the present invention is in that the merchant terminal 200 is not the subject of an approval request, and the mobile communication terminal 100 of a purchaser is the subject of a transaction approval in such a way as to make an approval request. Accordingly, it is apparent that the embodiment of Fig. 5 can be partially altered and then configured such that the mobile communication terminal 100 directly accesses a service provider, such as a bank or a card company, and requests payment therefrom, without passing through the PG 300.

That is, because the path of payment approval to the mobile communication terminal 100 or the merchant terminal 200 can be easily selected by those skilled in the art to which the present invention pertains after learning the present specification, it is apparent that all types of payment approval obtained through any paths will be included in the scope of the present invention.

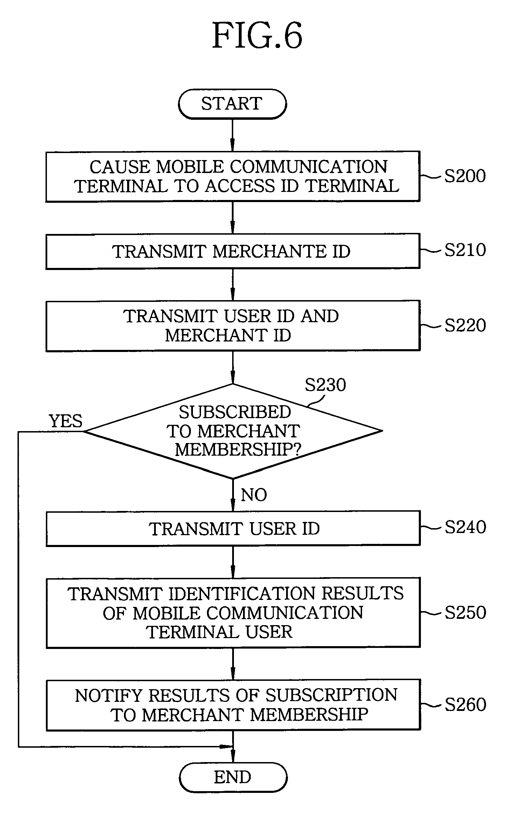

Hereinafter, the above-described procedure for subscribing to the membership of a merchant using the mobile communication terminal and the ID PG according to the present invention will be described with reference to Fig. 6.

First, in order for the user of the mobile communication terminal 100 to subscribe to a merchant, he or she causes the mobile communication terminal 100 to access a merchant ID terminal 200' at step S200.

The merchant ID terminal 200' transmits merchant ID to the mobile communication terminal 100 at step S210.

The mobile communication terminal 100 transmits the unique ID of the user and the merchant ID, which are stored in the terminal, to the ID PG 300" at step S220.

The ID PG 300" determines whether the user of the mobile communication terminal 100 has subscribed to the membership of the merchant at step S230. If it is determined that the user has not subscribed to the membership, the ID PG 300" transmits the user ID to a mobile communication company server 500 at step S240.

The mobile communication company server 500 identifies the user of the mobile communication terminal and transmits information about the user to the ID PG 300" at step S250.

The ID PG 300" prompts the user to subscribe to the membership of the merchant by associating the user with the merchant (for example, such as by adding user information to the area of the merchant that is stored in the database of the ID PG 300") on the basis of the user information received from the mobile communication company server 500, and transmits the results of the subscription to the merchant ID terminal 200', a merchant member management server and/or the mobile communication terminal 100.

As yet another embodiment of the present invention, it is also possible to configure the present invention such that the user may enter required information into his or her mobile communication terminal 100 without using the mobile communication company server 500, and may allow the entered information to be transmitted to the ID PG 300". For example, it is determined whether or not the user has subscribed to the membership of the merchant at step S230. If it is determined that the user has not subscribed to the membership, the ID PG 300" may directly receive the user information, entered by the user using the mobile communication terminal 100, from the mobile communication terminal 100.

As described above, although the construction of the present invention has been described in detail with reference to the attached drawings and preferred embodiments, those embodiments are only exemplified, and those skilled in the art will appreciate that various modifications and changes are possible without departing from the technical spirit and scope of the present invention.

Further, targets to which the present invention is to be applied should not be limited to the embodiments described in the present specification. For example, although the merchant in the present specification has been presented as a store and has been described, it is not limited and should be interpreted as a meaning that collectively designates institutions which register personal authentication information or enable financial transactions using a mobile communication terminal, such as institutions for providing various types of services, institutions for operating memberships, schools, hospitals, and government institutions. For such reasons, the term "purchaser" in the present specification should also be interpreted as a meaning that collectively designates persons who pay membership fees or pubic charges, subscribe to the membership, or register other pieces of personal information, in addition to a person who purchases a product or a service.

Therefore, the protection scope of the present invention should be defined by the description of the accompanying clauses.

## Claims

1. A payment system using a mobile communication terminal, comprising:
a merchant terminal for transmitting purchase information and merchant information to a mobile communication terminal of a purchaser; and
a financial server of a payment means financial company for receiving the purchase information, the merchant information, and financial information of the purchaser from the mobile communication terminal, wherein the payment means financial company corresponds to the financial information.

2. The payment system according to claim 1, wherein the merchant terminal comprises a communication unit enabling wired/wireless communication or mobile communication with the mobile communication terminal.

3. The payment system according to claim 2, wherein the communication unit is implemented as at least one of a short-range wireless transmission/reception module for Near Field Communication (NFC), Radio Frequency (RF) communication, Bluetooth communication, or optical communication, a wired transmission/reception module, and a mobile communication module.

4. The payment system according to claim 1, wherein the financial server receives the purchase information, the merchant information, and the financial information of the purchaser from the mobile communication terminal either directly or via a payment gateway.

5. A merchant terminal, comprising:
a memory unit for storing merchant information;
an input unit for inputting purchase information; and
a transmission unit for transmitting the purchase information and the merchant information to a mobile communication terminal of a user.

6. The merchant terminal according to claim 5, further comprising a wired/wireless communication port connected to a mobile communication device or a Point-of-Sale (POS) system of a merchant.

7. The merchant terminal according to claim 5, further comprising:
a reception unit for receiving payment approval information; and
a display unit for displaying the purchase information, the merchant information or the payment approval information.

8. A mobile communication terminal, comprising:
a short-range wireless communication module or a wired communication module;
memory for storing financial information; and
a control unit for, when receiving purchase information and merchant information via the short-range wireless communication module or the wired communication module, remotely and wirelessly transmitting the financial information together with the purchase information and the merchant information, and requesting payment.

9. The mobile communication terminal according to claim 8, wherein the memory is any one of a Universal Subscriber Identity Module (USIM) chip, an internal storage area of the terminal, and a separate memory card such as a Secure Digital (SD) card.

10. The mobile communication terminal according to claim 8, wherein the control unit remotely and wirelessly transmits the purchase information, the merchant information and the financial information and requests payment when receiving the purchase information and the merchant information.

11. The mobile communication terminal according to claim 8, wherein the control unit remotely and wirelessly transmits the personal financial information together with the purchase information and the merchant information and requests payment when receiving the purchase information and the merchant information using long-range communication .

12. A payment method using a mobile communication terminal, comprising:
receiving payment information, which is transmitted from a mobile communication terminal of a purchaser and which includes purchase information, merchant information, and financial information of the purchaser;
determining whether to approve a payment based on the payment information; and
transmitting information about payment approval.

13. The payment method according to claim 12, further comprising a merchant terminal transmitting the purchase information and the merchant information to the mobile communication terminal.

14. The payment method according to claim 12, wherein the receiving the payment information comprises:
the mobile communication terminal transmitting the payment information to a payment gateway;
the payment gateway detecting a relevant financial institution; and
the financial institution receiving the payment information from the payment gateway.

15. The payment method according to claim 12, further comprising:
setting a payment limit; and
charging a virtual account to correspond to the payment limit,
wherein the determining whether to approve the payment is configured to determine approval depending on whether the payment limit has been exceeded.

16. A payment method using a mobile communication terminal, comprising:
receiving payment information, which is transmitted from a mobile communication terminal of each purchaser and which includes purchase information and information about whether a cash transaction has been conducted;
storing the payment information for each purchaser; and
notifying a server of an Office of National Tax Administration of cash transaction information, which includes an amount of cash transaction, based on the stored payment information.

17. A method of subscribing to membership of a merchant using a mobile communication terminal, comprising:
receiving Identification (ID) of a merchant and ID of a user of a mobile communication terminal from the mobile communication terminal;
determining whether the user has subscribed to membership of the merchant;
if it is determined that the user has not subscribed to the membership, receiving personal information of the user;
prompting the user to subscribe to the membership of the merchant; and
transmitting results of the subscription.

18. The method according to claim 17, wherein the transmitting is configured to perform one or more of:
transmitting the results of the subscription to the mobile communication terminal;
transmitting the results of the subscription to a terminal of the merchant; and
transmitting the results of the subscription to a member management server of the merchant.

19. The method according to claim 17, wherein the receiving the personal information is configured to perform one or more of:
requesting the user to input personal information and inputting and receiving the personal information from the mobile communication terminal; and
identifying that the user is a mobile communication terminal user via a mobile communication company server and receiving the personal information of the user.
